# EUROPEAN PATENT APPLICATION

(11) **EP 4 518 043 A1**
(43) Date of publication of application: **05.03.2025**
(21) Application number: 24196429.5
(22) Date of filing: 26.08.2024
(51) Int. Cl.: H01R 13/629, H01R 13/641

(54) **CONNECTOR HOUSING ASSEMBLY AND CONNECTOR**

(30) Priority: 29.08.2023 DE 102023123218
(71) Applicant: TE Connectivity Solutions GmbH, 8200 Schaffhausen (CH)
(72) Inventor: VEIHL, Maximilian, 8200 Schaffhausen (CH); SPATARU, Florin, 8200 Schaffhausen (CH); SAMSTAG, Maximilian, 8200 Schaffhausen (CH)
(74) Representative: Grünecker Patent- und Rechtsanwälte PartG mbB

(57) **Abstract**

The present invention relates to a connector housing assembly (1) comprising: a connector housing (10) for receiving at least one electrical terminal; a pivotable lever (20) for mating the connector housing with a mating connector (30) along a mating direction (A), wherein the lever (20) is pivotable about a pivot axis (13) of the connector housing (10) between an initial position and an end position; an anti-rotation structure (40) which is configured to prevent rotation in the initial position of the lever (20). The lever (20) comprises a deformation section (22) which, when paired with the mating connector (30), is deformable such that the lever (20) is rotatable in particular from the initial position. To improve operating safety, the connector housing assembly (1) furthermore comprises a deformation maintenance structure which is configured to maintain the deformed state of the deformation section until the end position of the lever (20). The present invention additionally relates to a connector having such a connector housing assembly.

## Description

The present invention relates to a connector housing assembly and a connector comprising the connector housing assembly.

Connector housing assemblies which comprise a pivotable lever at a connector housing are known from prior art. By pivoting the lever, the connector housing can be mated or plugged together with a mating connector along a mating direction.

In prior art, premature and/or unwanted pivoting of the lever can occur. However, any safety mechanisms which temporarily prevent the lever motion typically have to be disengaged with great effort.

It is therefore the object of the present invention to provide a connector housing assembly with improved operating safety and manipulability.

This object is satisfied according to the invention by a connector housing assembly comprising: a connector housing for receiving at least one electrical terminal; a pivotable lever for mating the connector housing with a mating connector along a mating direction, wherein the lever is pivotable about a pivot axis of the connector housing between an initial position and an end position; an anti-rotation structure which is configured to prevent rotation in the initial position of the lever, wherein the lever comprises a deformation section which, when paired with the mating connector, is deformable such that the lever is rotatable in particular from the initial position. Furthermore, the connector housing assembly comprises a deformation maintenance structure that is configured to maintain the deformed state of the deformation section until the end position of the lever.

The anti-rotation structure is provided in order to prevent premature rotation of the lever when engagement with the mating connector has not yet been established. The deformation maintenance structure in turn ensures that the deformation section does not deform back after rotation has been enabled and therefore does not return to the undeformed state during rotation of the lever. This prevents problems when rotating the lever back to the initial position, which would otherwise require renewed deformation. In addition, the return to the undeformed state could adversely affect the mating process, which is likewise prevented by the deformation maintenance structure.

According to this aspect, the deformation of the deformation section can be maintained until the end position has been reached. This means that return to the undeformed state during rotation can be prevented, and renewed deformation when the lever is rotated back to the initial position can be prevented. The number of load changes can thus be reduced. In addition, mating with the mating connector can take place in a constant manner in the deformed state.

The invention can be further improved by the following configurations which are advantageous by themselves and which can be combined with one another arbitrarily.

According to one possible embodiment, the deformation section can be deformable in particular purely elastically in order to prevent undesirable permanent deformation.

The deformation section can be deformed in particular by contact of the connector housing assembly with the mating connector. The anti-rotation structure is then released automatically and without additional manual intervention.

Preferably, the anti-rotation structure is formed by a positive-fit connection between the lever and the connector housing, and the deformation section is deformable such that the positive-fit connection is released.

The rotation of the lever can then be more reliably prevented by the anti-rotation structure, which results in a considerable misuse force that the user or operator would have to apply to start the rotation. The positive-fit connection can also be easily restored by rotating the lever back from the deformed state.

According to a further aspect, the anti-rotation structure can comprise an engagement section on the lever side and an engagement section on the housing side that can be made to engage with one another in the initial position.

The positive-fit connection can then be established by mutual engagement of the engagement section on the lever side and the engagement section on the housing side, and in the initial position, the engagement section on the housing side can block rotation of the lever.

During rotation, the engagement section on the lever side cannot be made to engage with the engagement section on the housing side until the end position.

One of the engagement section on the lever side and the engagement section on the housing side is preferably configured to be depressed, and the other is configured to be projecting.

The engagement sections can then be manufactured in a simple manner. The projecting and depressed configuration can be carried out in particular parallel to the pivot axis.

Alternatively or additionally, the engagement section on the lever side can comprise a plurality of engagement elements on the lever side and the engagement section on the housing side can comprise a plurality of engagement elements on the housing side.

The misuse force can then be increased because a plurality of engagement elements is in engagement with one another, which increases the resistance force of the anti-rotation structure.

Throughout the rotation of the lever to the end position, at each circumferential position, at least one engagement section on the lever side is preferably not in engagement with an engagement element on the housing side.

The plurality of engagement elements on the lever side and on the housing side is preferably spaced from one another along a circumferential direction about the pivot axis.

The resistance to a misuse force can thus be increased, which increases operating safety. Furthermore, even if one engagement element fails, the rotation of the lever can be prevented by the remaining engagement elements.

It is advantageous to have a respective engagement contact surface, on which the at least one engagement element on the lever side and on the housing side are in engagement with one another, extend at least in sections and with at least one component perpendicular to the circumferential direction.

This also increases the misuse force.

According to a further aspect, the deformation maintenance structure can be formed at least in sections by the engagement section on the lever side and the engagement section on the housing side during the transition between the initial position and the end position.

This can make the connector housing assembly compact. In addition, the number of components can be reduced since no further components need to be provided to form the deformation maintenance structure.

According to a further aspect, the lever can be made to establish a frictional contact with the connector housing along a plane perpendicular to the pivot axis during the entire transition between the initial position and the end position.

This allows a frictional force to act which can prevent unwanted lever rotation when the lever rotation stops. In other words, the lever can be temporarily retained in an intermediate position by the frictional force. This increases the manipulability. For example, the engagement section on the lever side can then slide on the engagement section on the housing side.

According to yet another aspect, the lever can comprise a mating connector contact section which can be made to contact with the mating connector when mating and is preferably configured to widen or taper in the mating direction.

This allows the deformation of the deformation section to be obtained by contact with the mating connector on the mating connector contact section. The deformation of the deformation section can occur gently and/or continuously due to a tapering or widening configuration.

The mating connector contact section is preferably spaced farther from the anti-rotation structure in relation to the pivot axis, at least in sections. In other words, a distance between the mating connector contact section and the pivot axis can be longer than a distance between the anti-rotation structure and the pivot axis.

A sufficiently large deformation that can release the anti-rotation structure can then be obtained. This enables reliable operation.

Alternatively or additionally, in the initial position of the lever, the mating direction can be substantially perpendicular to a connecting line between the pivot axis and the mating connector contact section.

The connector housing assembly can then be configured to be compact in the mating direction. Furthermore, the mating connector contact section can easily come out of contact with the mating connector when mating with the mating connector, which reduces the stress on the lever. It is to be noted that the term "substantially" presently includes angular deviations of +/- 20° from the vertical.

According to yet another aspect, the lever can comprise an eccentric control section that is engageable with the mating connector for mating.

The eccentric control section can engage with an engagement section of the mating connector, whereby the relative advance rate between the connector housing and the mating connector in the mating direction can be controlled relative to the angle of rotation of the lever. The force that an operator applies to the lever can therefore be used to transmit it to the mating connector at the eccentric control section. The lever can therefore be used to assist the mating process. In the present invention, the eccentric control section can be deformed in a constant manner by the deformation maintenance structure, and mating with the mating connector can therefore be carried out reliably.

The eccentric control section is preferably formed to be tooth-like.

A tooth-like eccentric control section can enable uniform mating with the mating connector. The tooth flanks of the teeth can be deformed in a constant manner so that they are parallel to tooth flanks of the engagement section of the mating connector in the deformed state.

According to yet another aspect, the lever and/or the connector housing can be injection-molded.

This enables simple manufacture. In this way, the engagement section on the lever side and on the housing side can also be manufactured in a simple manner. As a material, thermoplastic can be used.

According to yet another aspect, the connector housing can comprise a guiding section that is configured to guide the mating connector parallel to the mating direction.

A linear motion along the mating direction between the connector housing and the mating connector can be obtained even when the lever is rotated.

A further aspect of the invention provides a connector comprising the connector housing assembly according to at least one of the preceding aspects.

A connector with increased operating safety and manipulability can thus be provided. Depending on the application, the connector can comprise electrical, optical, or opto-electrical contact elements that are connected to correspondingly formed complementary mating contacts of the mating connector when paired.

The present invention shall now be described in detail with reference to the accompanying drawings. The drawings show exemplary embodiments whose different features can be combined with one another as desired in accordance with the above remarks. In particular, individual features can be added to the described embodiments in accordance with the above explanations if the effect of these features is necessary for a specific application. Conversely, individual features can be omitted from the existing embodiments if the technical effect of these features is not important in a specific application. Similar, identical, and functionally identical elements in the drawings are provided with the same reference numerals to the extent as appropriate.

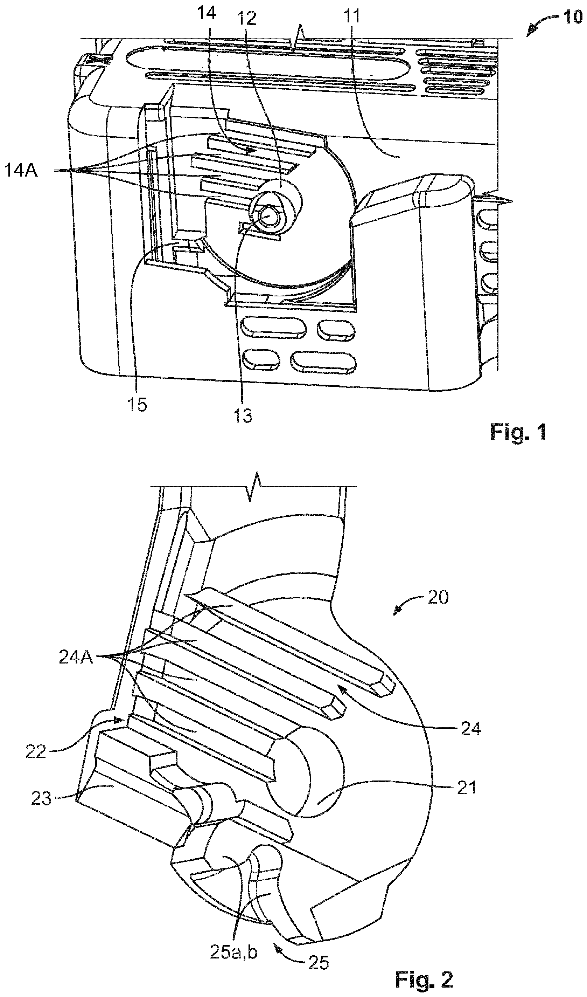

- Fig. 1: shows a schematic perspective illustration of a section of a connector housing of a connector housing assembly;
- Fig. 2: shows a schematic perspective illustration of a section of a lever of a connector housing assembly;

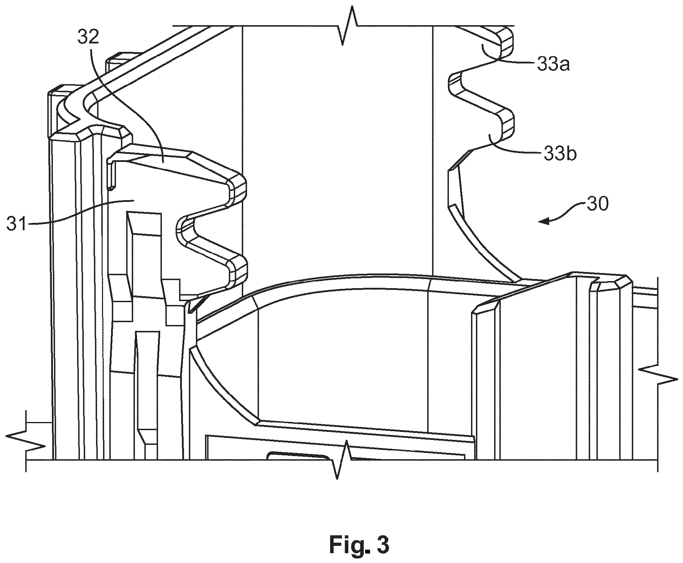

- Fig. 3: shows a schematic perspective illustration of a section of a mating connector for mating with the connector housing assembly;

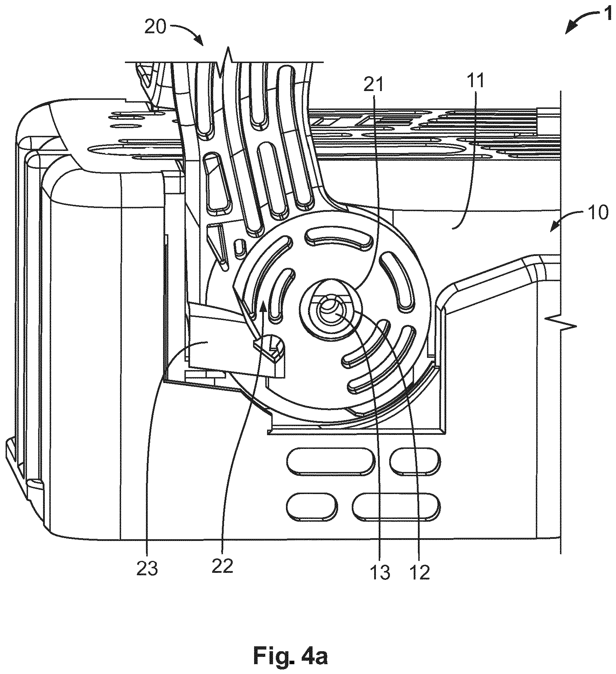

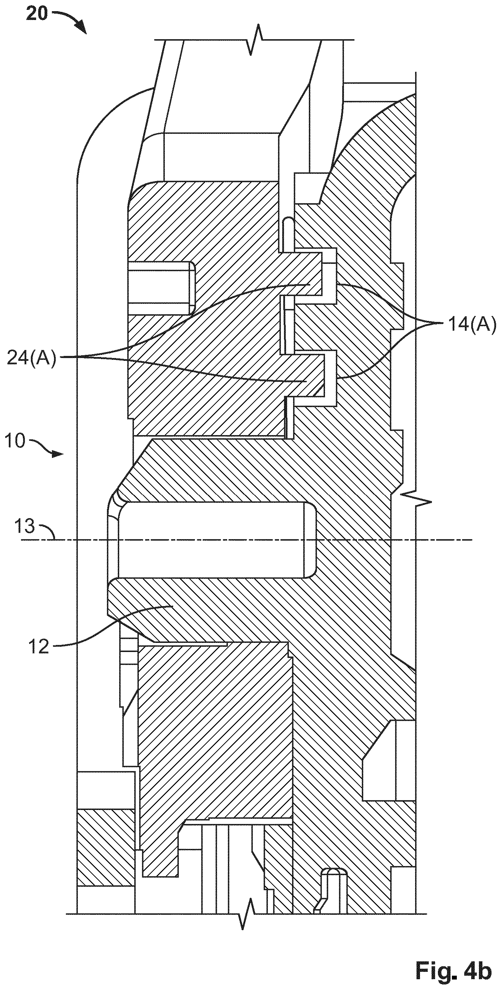

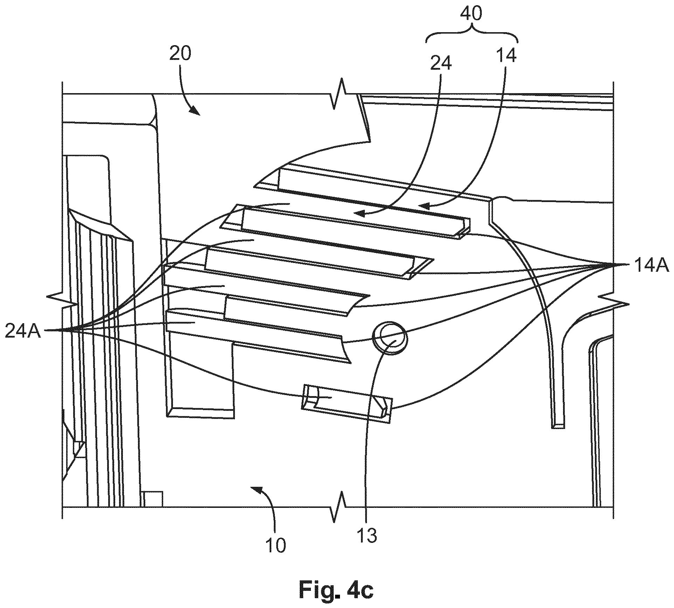

- Fig. 4: shows a schematic perspective illustration of a state in which the lever is in an initial position and the anti-rotation structure prevents rotation of the lever, Figure 4a) in a side view, Figure 4b) in a sectional view along the pivot axis, and Figure 4c) in a section perpendicular to the pivot axis through the anti-rotation structure;

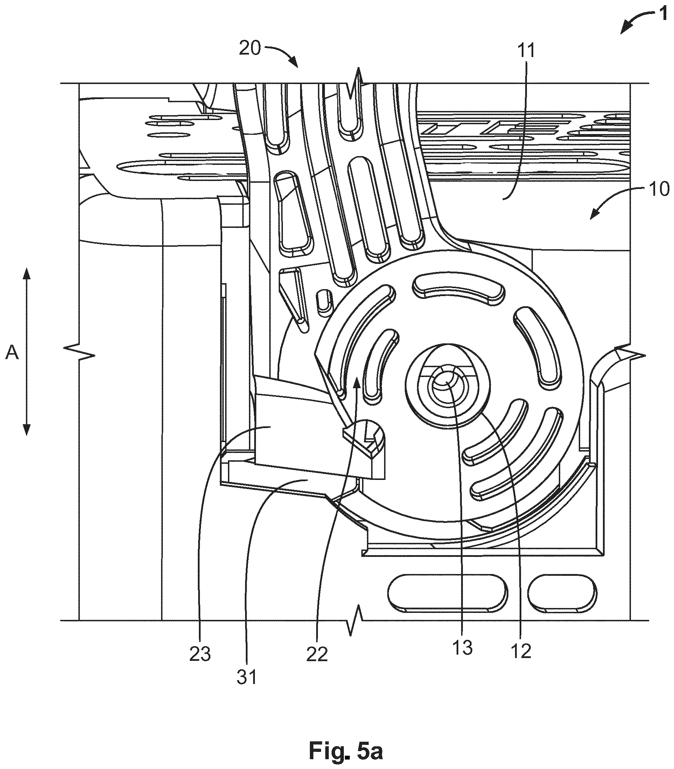

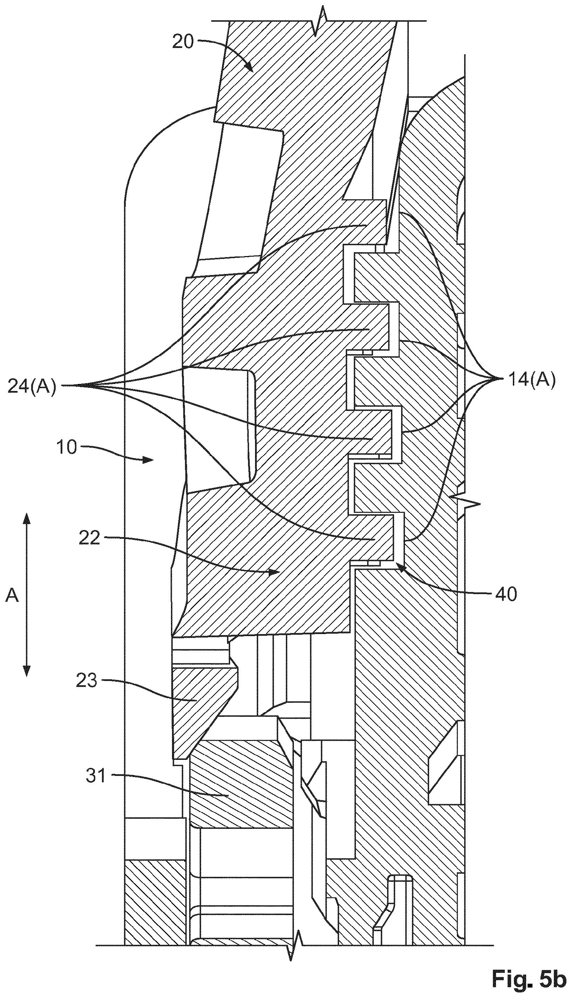

- Fig. 5: shows a schematic illustration of a state at the beginning of a mating process with the mating connector in which the lever is in an initial position and the anti-rotation structure prevents rotation of the lever, Figure 5a) in side view, and Figure 5b) in a sectional view parallel to the pivot axis through the anti-rotation structure;

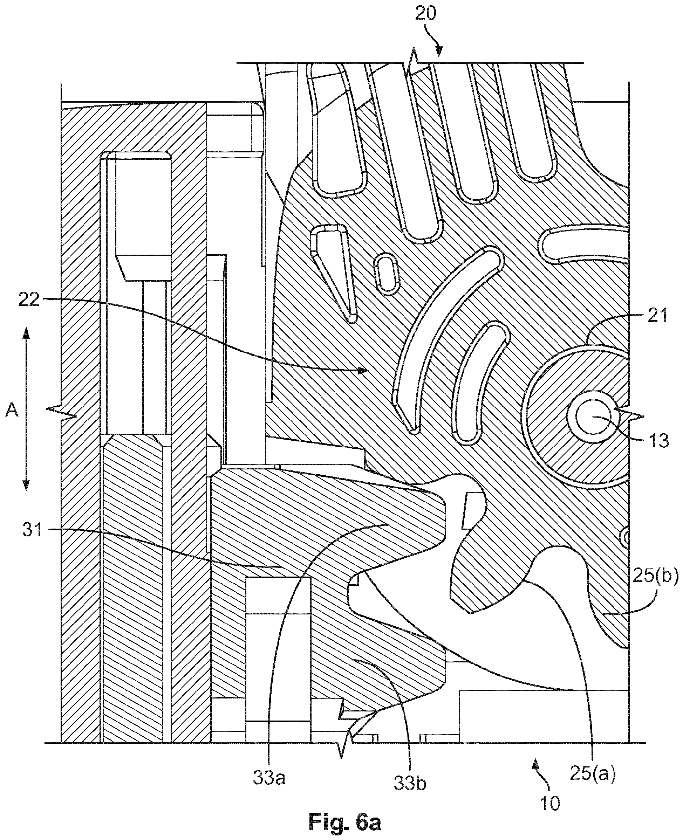

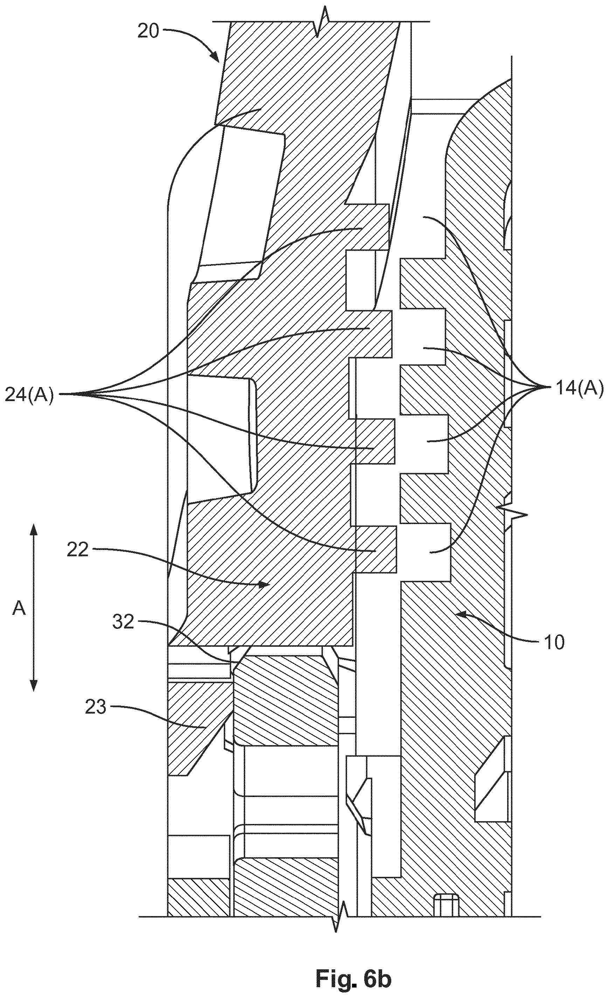

- Fig. 6: shows a schematic illustration of a state in which the mating process with the mating connector is advanced in which the lever is in an initial position and the anti-rotation structure is released, Figure 6a) in a sectional view perpendicular to the pivot axis through an eccentric control section, and Figure 6b) in a sectional view parallel to the pivot axis through the anti-rotation structure;

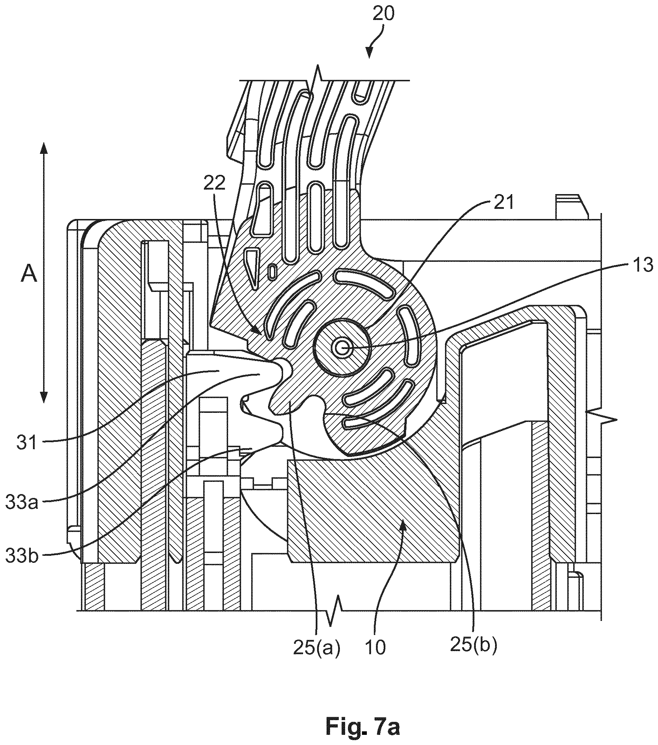

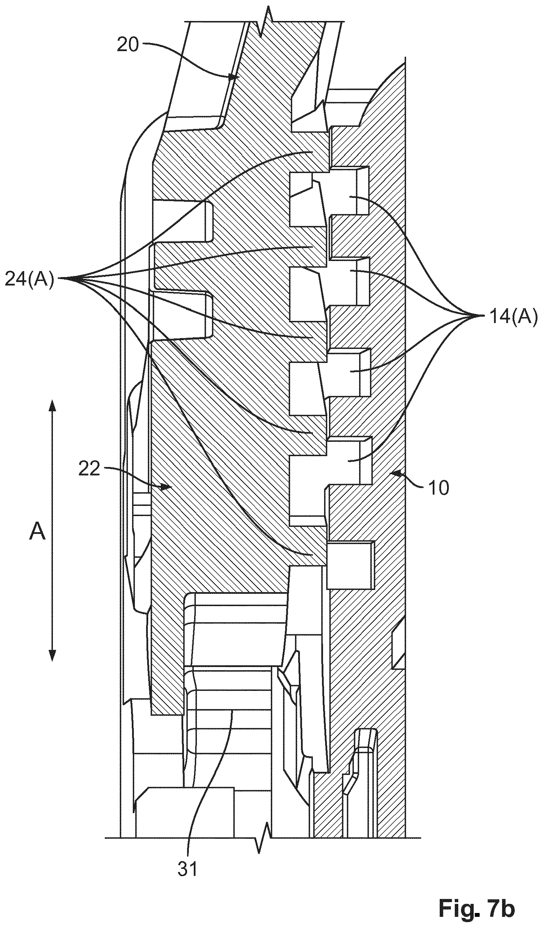

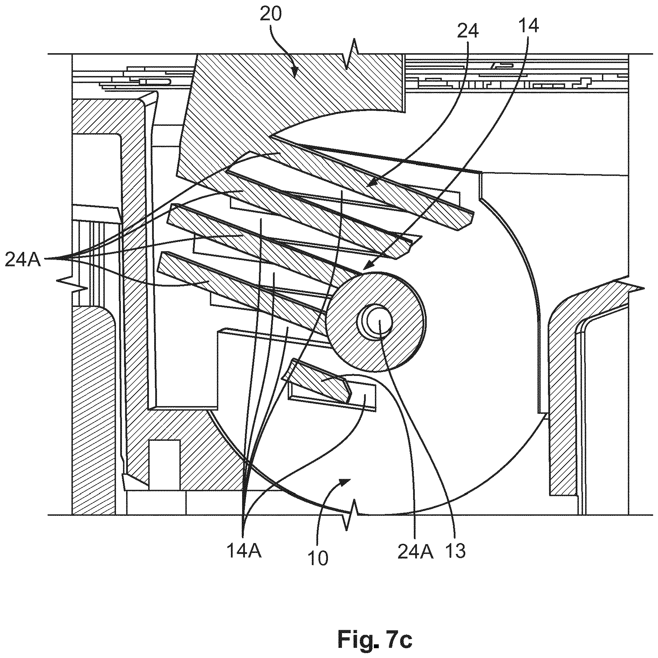

- Fig. 7: shows a schematic illustration of a state in which the mating process with the mating connector is further advanced, in which the lever is in an intermediate position and the anti-rotation structure is released, Figure 7a) in a sectional view perpendicular to the pivot axis through the eccentric control section, Figure 7b) in a sectional view parallel to the pivot axis, and Figure 7c) in a section perpendicular to the pivot axis through an engagement section on the lever side; and

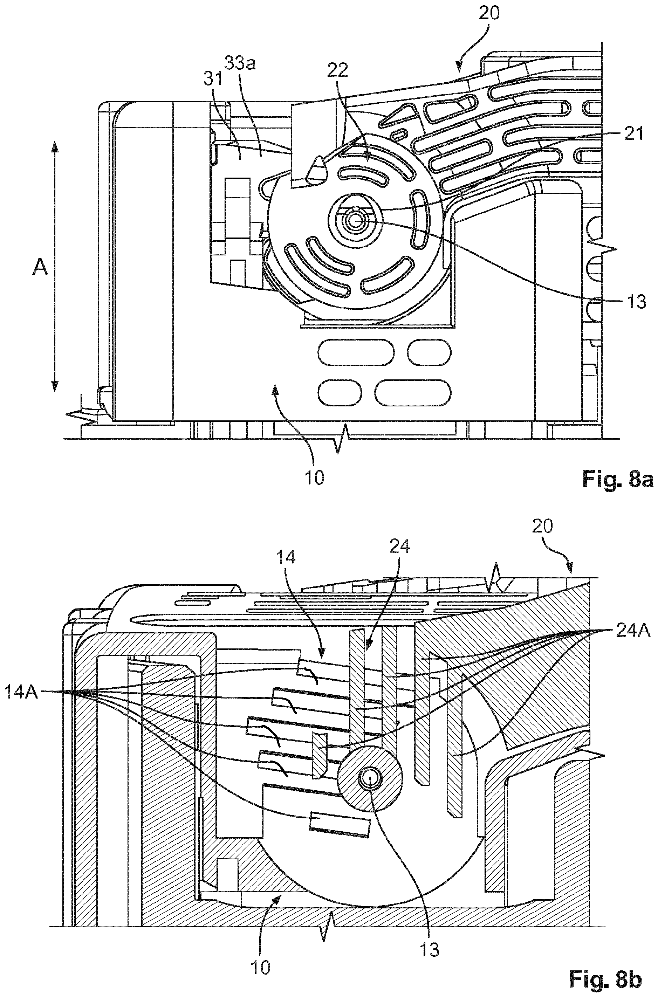

- Fig. 8: shows a schematic illustration of a state in which the mating process with the mating connector is even further advanced, in which the lever is in an end position and the anti-rotation structure is released, Figure 8a) in a side view, and Figure 8b) in a sectional view perpendicular to the pivot axis through the engagement section on the lever side.

Figures 4 to 8 show a connector housing assembly 1. The connector housing assembly 1 comprises the components shown in Figures 1 and 2, connector housing 10 and lever 20.

The connector housing assembly 1 can be used, for example, in a connector for high-voltage applications. The connector comprises at least one electrical terminal which is received in the interior of connector housing 10.

The connector housing 10 therefore has a housing function. It has a substantially parallelepiped shape. It comprises two wall sections 11 which are each oppositely disposed side wall sections, receive the at least one terminal therebetween, and are disposed opposite each other in a transverse direction. The transverse direction is perpendicular to a mating direction A shown in Figures 5 to 8. The mating direction A runs parallel to a longitudinal direction of the electrical terminal.

Each side wall section 11 comprises an axis formation section 12 defining a pivot axis 13, for example, at a center thereof. The Axis formation section 12 projects from an outer surface of the side wall section 11 and serves as a support section for the lever 20.

Furthermore, the connector housing 10 comprises an engagement section 14 on the housing side. It comprises grooves 14A around the axis formation section 12 at intervals in a circumferential direction about the pivot axis 13. The grooves 14A are arranged at regular intervals in mating direction A, wherein they are arranged in parallel. More specifically, the grooves 14A are therefore spaced with at least one component in the circumferential direction. The grooves 14A have a main direction of extension that intersects the mating direction A and is not parallel to the radial direction about the pivot axis 13 at least at one circumferential position. The grooves 14A are provided in a depressed manner in the outer surface and each comprise a groove base wall and two oppositely disposed groove side walls.

Although not shown, the lever 20 has an overall U-shape with two legs that are oppositely disposed in the transverse direction and a connecting section that connects in the transverse direction.

Each leg comprises a lever bearing section 21 at an end section disposed opposite the connecting section. The lever bearing section 21 is an opening that is arranged concentrically with the pivot axis 13 in the assembled state. The end section is formed to be predominantly circular in shape when viewed in the transverse direction (along the pivot axis) and transitions into an extension section that extends to the connecting section. It further comprises a deformation section 22 which shall be described in more detail hereafter. The deformation section 22 comprises a mating connector contact section 23. In the initial position of the lever 20, the mating connector contact section 23 is exposed towards the mating connector 30 in mating direction A and points in the direction of the housing. It comprises a section tapering towards the mating connector 30 in mating direction A through an inclined inner surface. The mating connector contact section 23 is located more distant in a direction parallel to the pivot axis 13 than the grooves 14A and more distant than an engagement section 24 on the lever side. It is to be noted that the lever 20 is shown in Figure 2 with an inner side pointing outwardly.

With respect to the lever bearing section 21, the engagement section 24 on the lever side is provided further inwardly, i.e. closer to the pivot axis 13, from the mating connector contact section 23 in the deformation section 22. It comprises several projections 24A.

Similar to the grooves 14A of the connector housing 10, the projections 24A are arranged around the lever bearing section 21 at intervals in a circumferential direction about the pivot axis 13. The projections 24A in the initial position are arranged at regular intervals in mating direction A, where they are arranged in parallel. More specifically, the projections 24A are therefore spaced with at least one component in the circumferential direction. The projections 24A have a main direction of extension that intersects mating direction A and is not parallel to the radial direction about the pivot axis 13 at least at one circumferential position. Like the grooves 14A, the projections 24A extend with a component perpendicular to the circumferential direction. The projections 24A are provided in a projecting manner on the inner surface of the deformation section 22 and each comprise a projection tip wall that is located furthest inside, and two oppositely disposed projection side walls. In the transverse direction, the projections 24A (the engagement section 24 on the lever side) are located further inside than the mating connector contact section 23.

Besides the projections 24A, the deformation section 22 comprises an eccentric control section 25 on the periphery of the circular section. The eccentric control section 25 is also located closer to the pivot axis 13 than the mating connector contact section 23. In the transverse direction, it is arranged further inside than the mating connector contact section 23. It is formed to be tooth-like and presently comprises two teeth 25a, 25b along the circumferential direction. A gap between teeth 25a, 25b in the circumferential direction for engagement with teeth of the mating connector is covered on the outside.

Functions and effects of the present invention shall now be described.

First, the two legs of the lever 20 are spread to mount the end section with the lever bearing section 21 at the axis formation section 12 in each case. The projections 24A are thereby made to engage with the grooves 14A, as shown in Figure 4. The lever 20 is in an initial position in which the lever legs extend substantially in mating direction A.

An anti-rotation structure 40 is formed by the engagement section 14 on the housing side and the engagement section 24 on the lever side. In particular, when the lever 10 rotates clockwise about the pivot axis 13, the projection side walls located in mating direction A on the housing side and the groove side walls located in the mating direction on the mating connector side are each engagement contact surfaces. Since they extend with a component perpendicular to the circumferential direction, they block the rotation. The projections 24A can be inserted into the grooves 14A with clearance.

In Figure 5, the mating connector 30 from Figure 3 is moved in mating direction A toward the connector housing 10. It has an arm 31 pointing in mating direction A. At its front end, a tapered section 32 is provided in the direction of the connector housing 10 (see Figure 6). The connector housing 10 comprises an arm deflection section 15 which, in the mating direction, is located in the path of arm 31. Arm 31 can then be moved outwardly in the transverse direction.

Figure 6 shows a state in which the tapered section 32 and the tapered section of the mating connector contact section 23 have passed each other in mating direction A. The deformation section 22 extends substantially from the mating connector contact section 23 to the pivot axis 13 in a direction perpendicular to the pivot axis 13. The deformation section 22 is thus elastically deformed. The deformation section 22 is in particular bent outwardly in the transverse direction, wherein the axis formation section 12 serves as a center of bending. Since the grooves 14A and the projections 24A extend substantially parallel to a connecting line from the pivot axis 13 to the mating connector contact section 23, the bending moment caused by the arm 31 can reliably disengage the projections 24. The lever 20 can thereafter be rotated in the circumferential direction. The connecting line is further substantially perpendicular to the mating direction A, whereby the bending moment can be reliably applied.

With the rotation, teeth 25a and 25b can be made to engage with teeth 33a and 33b of the mating connector 30.

Figure 7 shows an intermediate position between the initial position and the end position. As can be seen there, at least one projection 24A, preferably all of them, is not engaged with a groove 14A. This is because at least the projections 24A on the lever side do not extend in the radial direction and cannot be made to coincide with a groove 14A at circumferential positions other than the initial position. The projection tip wall of each projection 24A therefore slides on the outer surface of the connector housing 10 provided between the grooves 14. Frictional contact is then established between the lever 20 and the connector housing 10. In addition, the deformation maintenance section is formed by the engagement section 14 on the housing side and the engagement section 24 on the lever side. This means that the deformation is ensured in the region where the two engagement sections overlap during rotation. As a result, the deflection of the deformation section 22 is maintained.

In addition, teeth 25a and 25b engage with teeth 33a and 33b (engagement section of the mating connector) of arm 31 which are formed on a side of arm 31 in mating direction A facing the pivot axis 13. Arm 31 and the mating connector can therefore be moved towards the connector housing 10 by a force applied to the connecting section of the lever 20. The connecting section is preferably located farther from the pivot axis 13 than the eccentric control section 25. The mating process can then be performed efficiently.

It is to be noted that the connector housing 10 can comprise a guiding section that serves to guide arm 31 along the mating direction.

In the deformed state, the eccentric control section 25 is deformed such that the tooth flanks of teeth 25a and 25b are parallel to pivot axis 13, or a tooth plane (also a control plane) is disposed perpendicular to pivot axis 13. This ensures optimal engagement.

As can be seen in Figure 8, the deformed state is maintained until the end position. The mating connector contact section 23 can be disengaged from arm 31 and therefore no longer has to provide the deformation.

The connector housing 10 can comprise a stop that defines the end position of the lever. A locking structure can be provided that locks the lever 20 in the end position at the connector housing 10.

The lever 20 can be pivoted between the initial position and the end position by at least 60°, preferably at least 75°, and again preferably by at least 90°. In the end position, the legs extend substantially transverse to mating direction A.

The lever 20 and/or the connector housing 10 can be injection-molded from thermoplastic material. This facilitates the formation of the engagement sections on the lever side and the housing side.

As can be seen in Figure 1, the outer surface in which the grooves 14A are provided is circularly offset from the remainder of the side wall 11, so that the end section of the lever can be guided in the rotational direction (circumferential direction). In other words, the connector housing assembly can have a rotation guiding structure.

In the above embodiment, the anti-rotation structure 40 is formed by a positive-fit connection. However, it can also be formed by a force-fit connection.

Furthermore, the grooves 14A are examples of engagement elements on the housing side, while the projections 24A, which are rib-shaped, are examples of engagement elements on the lever side. However, the engagement section on the lever side can also be configured to be depressed instead of the projecting configuration, while the engagement section on the housing side can be projecting.

More complex geometries of the engagement sections such as hook-shaped configurations are also conceivable.

In the embodiment, the deformation section is deformed by bending. However, purely translational deformations are also conceivable, as long as the anti-rotation structure is releasable by deformation.

The deformation maintenance structure can also comprise a further element at the housing. If this element wears due to friction, it can be replaced without having to replace the lever 20 and/or the connector housing 10.

The mating connector contact section comprises a section that tapers in the direction of the mating connector. If the mating connector in other embodiments is configured accordingly, it can also be configured to be widening.

The eccentric control section can also be configured as a link guide.

### REFERENCE NUMERALS

- 1: connector housing assembly
- 10: connector housing
- 11: side wall
- 12: axis formation section
- 13: pivot axis
- 14: engagement section on the housing side
- 14A: groove (engagement element on the housing side)
- 15: arm deflection section
- 20: lever
- 21: lever bearing section
- 22: deformation section
- 23: mating connector contact section
- 24: engagement section on the lever side
- 24A: projection (engagement element on the lever side)
- 25: eccentric control section
- 25a, 25b: tooth
- 30: mating connector
- 31: arm
- 32: tapered section
- 33a, b: tooth of the mating connector
- 40: anti-rotation structure
- A: mating direction

## Claims

1. Connection housing assembly (1) comprising:
a connector housing (10) for receiving at least one electrical terminal;
a pivotable lever (20) for mating the connector housing with a mating connector (30) along a mating direction (A), wherein the lever (20) is pivotable about a pivot axis (13) of the connector housing (10) between an initial position and an end position;
an anti-rotation structure (40) which is configured to prevent rotation in the initial position of the lever (20),
wherein the lever (20) comprises a deformation section (22) which, when paired with the mating connector (30), is deformable such that the lever (20) is rotatable,
wherein the connector housing assembly (1) furthermore comprises a deformation maintenance structure that is configured to maintain the deformed state of the deformation section until the end position of the lever (20).

2. The connector housing assembly (1) according to claim 1,
wherein the anti-rotation structure (40) is formed by a positive-fit connection between the lever (20) and the connector housing (10), and the deformation section (20) is deformable such that the positive-fit connection is released.

3. The connector housing assembly (1) according to claim 1 or 2,
wherein the anti-rotation structure (40) comprises an engagement section (24) on the lever side and an engagement section (14) on the housing side that can be made to engage with one another in the initial position.

4. The connector housing assembly (1) according to claim 3,
wherein one of the engagement section (24) on the lever side and the engagement section (14) on the housing side is configured to be depressed, and the other is configured to be projecting.

5. The connector housing assembly (1) according to claim 3 or 4,
wherein the engagement section (24) on the lever side comprises a plurality of engagement elements (24A) on the lever side and the engagement section (14) on the housing side comprises a plurality of engagement elements (14A) on the housing side.

6. The connector housing assembly (1) according to claim 5,
wherein the plurality of engagement elements on the lever side (24A) and on the housing side (14A) is spaced from one another along a circumferential direction about the pivot axis (13).

7. The connector housing assembly (1) according to any one of claims 3 to 6,
wherein the deformation maintenance structure is formed at least in sections by the engagement section (24) on the lever side and the engagement section (14) on the housing side during the transition between the initial position and the end position.

8. The connector housing assembly (1) according to any one of claims 1 to 7,
wherein the lever (20) can be made to establish a frictional contact with the connector housing (10) along a plane perpendicular to the pivot axis (13) during the entire transition between the initial position and the end position.

9. The connector housing assembly (1) according to any one of claims 1 to 8,
wherein the lever (20) comprises a mating connector contact section (23) which can be made to contact with the mating connector (30) when mating and is preferably configured to widen or taper in the mating direction (A).

10. The connector housing assembly (1) according to claim 9,
wherein the mating connector contact section (23) is spaced from the anti-rotation structure (40) in relation to the pivot axis (13), at least in sections.

11. The connector housing assembly (1) according to claim 9 or 10,
wherein, in the initial position of the lever (20), the mating direction (A) is substantially perpendicular to a connecting line between the pivot axis (13) and the mating connector contact section (23).

12. The connector housing assembly (1) according to any one of claims 1 to 11,
wherein the lever (20) comprises an eccentric control section (25) that is engageable with the mating connector (30) for mating.

13. The connector housing assembly (1) according to claim 12,
wherein the eccentric control section (25) is formed to be tooth-like.

14. The connector housing assembly (1) according to any one of claims 1 to 13,
wherein the the connector housing (10) comprises a guiding section that is configured to guide the mating connector (30) parallel to the mating direction (A).

15. A connector comprising the connector housing assembly (1) according to any one of claims 1 to 14.
